(19) Europäisches Patentamt
European Patent Office
Office européen des brevets

(11) Veröffentlichungsnummer : **0 155 470**
**B1**

(12) # EUROPÄISCHE PATENTSCHRIFT

(45) Veröffentlichungstag der Patentschrift : **27.05.87**

(51) Int. Cl.⁴ : **C 09 B 29/01**, C 09 B 29/08, D 06 P 1/18

(21) Anmeldenummer : **85100923.3**

(22) Anmeldetag : **30.01.85**

(54) **Wasserunlösliche Monoazofarbstoffe, ihre Herstellung und Verwendung.**

(30) Priorität : **07.02.84 DE 3404130**

(43) Veröffentlichungstag der Anmeldung : **25.09.85 Patentblatt 85/39**

(45) Bekanntmachung des Hinweises auf die Patenterteilung : **27.05.87 Patentblatt 87/22**

(84) Benannte Vertragsstaaten : **CH DE FR GB IT LI**

(56) Entgegenhaltungen :
**EP-A- 0 025 903**
**FR-A- 2 071 945**
**FR-A- 2 383 924**
**US-A- 3 962 209**

(73) Patentinhaber : **CASSELLA Aktiengesellschaft**
**Hanauer Landstrasse 526**
**D-6000 Frankfurt am Main 61 (DE)**

(72) Erfinder : **Bühler, Ulrich, Dr.**
**Kastanienweg 8**
**D-8755 Alzenau (DE)**
Erfinder : **Tappe, Horst, Dr.**
**Ringstrasse 9**
**D-6057 Dietzenbach (DE)**
Erfinder : **Hähnke, Manfred, Dr.**
**Behring-Strasse 13**
**D-6233 Kelkheim (DE)**
Erfinder : **Bode, Albert**
**Finkenweg 1**
**D-6231 Schwalbach (DE)**
Erfinder : **Roth, Kurt**
**Breckenheimer Strasse 35**
**D-6238 Hofheim (DE)**
Erfinder : **Boos, Margarete**
**Am See 6**
**D-6234 Hattersheim 3 (DE)**

(74) Vertreter : **Urbach, Hans-Georg, Dr.**
**Hanauer Landstrasse 526**
**D-6000 Frankfurt am Main 61 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 155 470 B1

Jouve, 18, rue St-Denis, 75001 Paris, France

**Beschreibung**

Die vorliegende Erfindung betrifft wertvolle neue, von ionogenen Gruppen freie Azofarbstoffe der allgemeinen Formel I

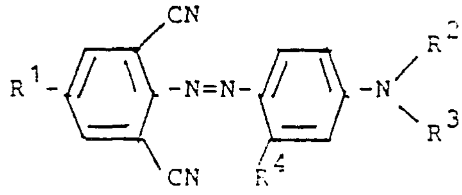

(I)

in der

$R^1$ Alkyl mit 2 bis 6 C-Atomen oder Cycloalkyl mit 5 oder 6 C-Atomen und, sofern $R^2$ und/oder $R^3$ Cyanalkyl bedeutet, auch Halogen oder Methyl,

$R^2$ und $R^3$ unabhängig voneinander lineares Alkyl mit 1 bis 4 C-Atomen, Alkoxyalkyl mit 2 bis 4 C-Atomen in der Alkyl- und mit 1 bis 4 C-Atomen in der Alkoxygruppe, und Cyanalkyl mit 2 bis 4 C-Atomen in der Alkylgruppe und

$R^4$ Wasserstoff oder Methyl bedeuten.

Die Erfindung betrifft auch Mischungen von Farbstoffen der Formel I, wobei in solchen Mischungen $R^1$ bei einer Farbstoffkomponente auch für Methyl stehen kann.

Ferner betrifft die Erfindung die Herstellung dieser Farbstoffe und ihrer Mischungen und ihre Verwendung zum Färben von hydrophoben Fasermaterialien.

Alkylreste mit 2 bis 6 C-Atomen, die für $R^1$ stehen, können linear oder verzweigt sein. Beispiele für solche Reste sind Ethyl, n-Propyl, i-Propyl, n-Butyl, i-Butyl, sek.Butyl, tert.Butyl, n-Pentyl, i-Pentyl und n-Hexyl.

Cycloalkylreste mit 5 oder 6 C-Atomen sind die Cyclopentyl- und Cyclohexyl-Reste. Für $R^1$ stehendes Halogen ist Fluor, vorzugsweise Chlor oder Brom.

Alkylreste, die für $R^2$ oder $R^3$ stehen, können ebenfalls verzweigt sein Vorzugsweise ist jedoch mindestens einer der für $R^2$ und $R^3$ stehenden Alkylreste linear.

Lineare Alkylreste mit 1 bis 4 C-Atomen, die für $R^2$ oder $R^3$ stehen können, sind z. B. Methyl, Ethyl, n-Propyl und n-Butyl.

Alkoxygruppen mit 1 bis 4 C-Atomen in den Alkoxyalkylresten, die für $R^2$ oder $R^3$ stehen können, sind. z. B. Methoxy, Ethoxy, n-Propoxy, i-Propoxy, n-Butoxy, i-Butoxy oder tert.Butoxy.

Die genannten Alkoxyreste können mit Ausnahme der 1-Stellung in jeder Stellung des Alkylrestes der Alkoxyalkylgruppe stehen, so z. B. in einer Ethylgruppe in der 2-Stellung, in einer Propulgruppe in der 2- oder 3-Stellung und in einer Butylgruppe in der 2-, 3- oder 4-Stellung. Beispiele für solche Alkoxyalkylgruppen sind 2-Methoxyethyl, 2-Butoxyethyl, 2-tert.Butoxyethyl, 2-Methoxypropyl, 3-Methoxypropyl, 2- oder 3-Propoxypropyl, 2-, 3- oder 4-Methoxybutyl. Bevorzugt sind solche Alkoxyalkylreste, in denen die Alkoxygruppe am äußersten C der Alkylkette gebunden ist. Cyanalkylreste, die für $R^2$ und $R^3$ stehen können, sind 2-Cyanethyl, 3-Cyanpropyl-(1), 3-Cyanpropyl-(2) und Cyanbutyl. Von den Farbstoffen, in denen $R^2$ und/oder $R^3$ Cyanalkyl bedeuten, sind solche bevorzugt, in denen nur einer der Substituenten $R^2$ oder $R^3$ eine Cyanalkylgruppe, der andere eine der definierten Alkoxyalkyl- oder insbesondere Alkylgruppen ist.

Bevorzugte Alkylreste für $R^1$ sind n-Propyl und i-Propyl ; ein besonders bevorzugter Alkylrest $R^1$ ist Ethyl.

Bevorzugte unsubstituierte Alkylreste $R^2$ bzw. $R^3$ sind Ethyl oder Propyl.

Bevorzugte Alkoxyalkylreste $R^2$ bzw. $R^3$ sind Alkoxyethylreste, insbesondere die Methoxy- und Ethoxyethylreste.

Ein bevorzugter Cyanalkylrest $R^2$ bzw. $R^3$ ist der 2-Cyanethylrest.

Besonders bevorzugt sind Farbstoffe, in denen $R^1$ für Ethyl und $R^2$ und $R^3$ unabhängig voneinander für lineares Alkyl mit 1 bis 4 C-Atomen, insbesondere für Ethyl und Propyl und $R^4$ für Methyl stehen.

Besonders bevorzugt sind weiter Farbstoffe, in denen $R^1$ für Methyl, Ethyl, Chlor oder Brom, $R^2$ für Cyanalkyl, insbesondere Cyanethyl oder $R^3$ für lineares Alkyl oder Alkoxyethyl, insbesondere Ethyl und n-Propyl oder n-Butyl stehen und $R^4$ Wasserstoff und insbesondere Methyl bedeutet.

Den erfindungsgemäßen Farbstoffen ähnliche Farbstoffe sind bereits bekannt und in der EP-PS 25 903 beschrieben. Es wurde überraschenderweise jedoch gefunden, daß die erfindungsgemäßen Farbstoffe im färberischen Verhalten auf verschiedenen Substraten, insbesondere in der HT-Färberei bei Temperaturen unterhalb 130 °C, sowie in einigen wichtigen Gebrauchsechtheiten, z. B. der Lichtechtheit, deutlich überlegen sind.

Die Herstellung der erfingsgemäßen Farbstoffe erfolgt vorzugsweise dadurch, daß man Azofarbstoffe der Formel II

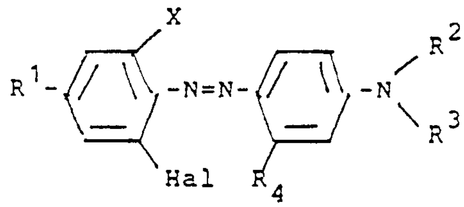

(II)

in welcher $R^1$, $R^2$, $R^3$ und $R^4$ die vorstehenden Bedeutungen haben, X Cyan oder Hal und Hal ein Halogenatom wie Chlor oder insbesondere Brom bedeuten, in an sich bekannter Weise, z. B. nach den Angaben der DE-OS 1 809 920, der DE-OS 1 809 921, der GB-PS 1 184 825, der DE-AS 1 544 563, der DE-OS 2 310 745, der DE-AS 2 456 495, der DE-AS 2 610 675, der DE-OS 2 724 116, der DE-OS 2 724 117, der DE-OS 2 834 137, der DE-OS 2 341 109 der US-PS 3 821 195, der DE-OS 2 715 034 oder der DE-OS 2 134 896 einer nukleophilen Austauschreaktion unterwirft, wobei als nucleophiles Agens das Cyanidion $CN^{\ominus}$ eingesetzt wird.

Als Lösungsmittel für die Austauschreaktion werden inerte organische Lösungsmittel, wie z. B. Nitrobenzol oder Glycol- oder Diglycol-mono-methyl oder -mono-ethyläther oder Mischungen solcher Lösungsmittel untereinander und mit tertiären organischen Stickstoffbasen, dipolare aprotische Lösungsmittel, wie z. B. Methylpyrrolidon, Pyridin, Dimethylformamid oder Dimethylsulfoxyd, Dicyandialkylthioäther eingesetzt. Weiterhin sind als Medium für die Austauschreaktion Wasser oder wäßrige Systeme bestehend aus Wasser und einem mit Wasser unmischbaren (z. B. Nitrobenzol) organischen Lösungsmittel, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z. B. Pyridin und Pyridinbasen, aus.

Die Reaktionstemperaturen liegen normalerweise zwischen 20 und 150 °C.

Das nucleophile Agens $CN^{\ominus}$ wird der Reaktion in Form eines gegebenenfalls komplexen Metallcyanids, wie z. B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Mengenverhältnis von Alkali und Kupfersalz in weiten Grenzen variiert werden kann.

Der gängige Bereich des Alkalicyanid/Kupfer-I-cyanid-Verhältnisses liegt bei 5 : 95 bis 95 : 5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z. B. einer Kombination von Alkalicyanid mit einem anderen Kupfersalz, vorzugsweise Kupfer-I-salz, z. B. einem Kupfer-I-halogenid, zu ersetzen.

Die zur Herstellung der erfindungsgemäßen Farbstoffe erforderlichen Farbstoffe der Formel II können dadurch hergestellt werden, daß eine Diazoniumverbindung eines aromatischen Amins der allgemeinen Formel III

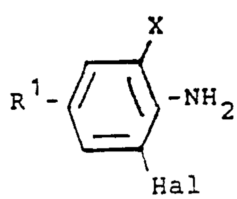

(III)

mit einer Kupplungskomponente der allgemeinen Formel IV

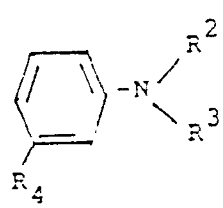

(IV)

worin $R^1$, $R^2$, $R^3$ und $R^4$ die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z. B. Ameisensäure, Essigsäure oder Propionsäure oder deren Mischungen, oder einem organischen Lösungsmittel bei Temperaturen von — 15 °C bis 40 °C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40 °C, vorzugsweise 0 bis 25 °C, in einem geeigneten Lösungsmittel, wie z. B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z. B. durch Zugabe von Natriumacetat. Die Kupplung ist nach einigen Stunden beendet, und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Ein weiteres Verfahren zur Herstellung der erfindungsgemäßen Farbstoffe besteht darin, daß man ein Amin der Formel V

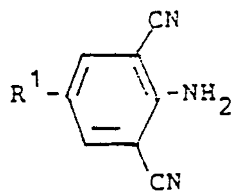

(V)

diazotiert und auf eine Kupplungskomponente der Formel IV

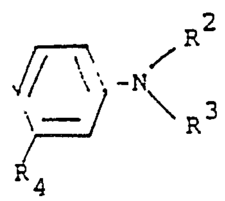

(IV)

in der $R^2$, $R^3$ und $R^4$ die oben angegebenen Bedeutungen haben, kuppelt.

Aus den Aminen der allgemeinen Formel V werden die Diazoniumverbindungen in an sich bekannter Weise durch Einwirkung von salpetriger Säure oder anderen, Nitrosoniumionen bildenden Systemen in einer Mineralsäure oder einem mineralsauren wäßrigen Medium, einer Niederalkancarbonsäure, wie z. B. Ameisensäure, Essigsäure oder Propionsäure oder deren Mischungen, oder einem organischen Lösungsmittel bei Temperaturen von 0 bis 40 °C erhalten.

Die Kupplung erfolgt auch hier in an sich bekannter Weise durch Vereinigung der erhaltenen Diazolösung mit einer Lösung der Kupplungskomponente bei Temperaturen von 0 bis 40 °C, vorzugsweise 0 bis 25 °C, in einem geeigneten Lösungsmittel, wie z. B. einem Alkanol mit mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z. B. durch Zugabe von Natriumacetat. Die Kupplung ist nach einigen Stunden beendet, und der Farbstoff kann wie üblich isoliert und getrocknet werden.

Die erfindungsgemäßen Farbstoffmischungen bestehen aus zwei oder mehreren Farbstoffen der Formel I, in der $R^1$ bis $R^4$ die oben angegebenen Bedeutungen haben und $R^1$ auch dann Methyl sein kann, wenn $R^2$ und/oder $R^3$ nicht Cyanalkyl sind.

Vorzugsweise enthalten die Mischungen mindestens eine Komponente, in der $R^1$ Alkyl mit 2 bis 6 C-Atomen oder Cycloalkyl mit 5 oder 6 C-Atomen ist.

In bevorzugten Farbstoffmischungen sind die Reste $R^4$ der jeweiligen Einzelfarbstoffe gleich und die Reste $R^1$, $R^2$ und $R^3$ im Rahmen der obigen Definition variabel.

Insbesondere sind solche Farbstoffmischungen bevorzugt, in denen die Reste $R^1$, sofern sie in den einzelnen Komponenten verschieden und Kohlenwasserstoffreste sind, Homologe einer Reihe darstellen. Dasselbe gilt für die Reste $R^2$ und $R^3$. Homologe einer Reihe unsubstituierter Alkylreste oder Cyanalkylreste unterscheiden sich durch die Anzahl von Methylengruppen im Alkylrest. Homologe einer Reihe alkoxysubstituierter Alkylreste unterscheiden sich durch die Anzahl von Methylengruppen im Alkylrest oder in den Alkoxygruppen. In Farbstoffmischungen, deren Komponenten sich bezüglich $R^1$ unterscheiden, kann $R^1$ im Rahmen der obigen Definition ein Kohlenwasserstoffrest oder ein Halogen sein. Bevorzugt sind Mischungen aus Komponenten, in denen alle $R^1$ entweder Kohlenwasserstoffreste sind oder verschiedene Vertreter der Halogenreihe.

In den erfindungsgemäßen Farbstoffmischungen kann das Verhältnis der verschiedenen Farbstoffe

der allgemeinen Formel I in relativ weiten Grenzen variieren. Im allgemeinen beträgt der Mindestgewichtsanteil einer Komponente 10 % und der maximale Gewichtsanteil 90 %. Bei Farbstoffmischungen, die nur aus zwei Farbstoffen der allgemeinen Formel I bestehen, ist ein Mengenverhältnis von 70 : 30 bis 30 : 70 bevorzugt, d. h. der Gewichtsanteil eines Farbstoffs beträgt 30 bis 70 %.

Besonders bevorzugt sind solche erfindungsgemäßen Farbstoffe und Farbstoffmischungen, in denen zwei oder mehrere der oben genannten bevorzugten Merkmale vorliegen.

Die erfindungsgemäßen Farbstoffmischungen können nach verschiedenen Verfahren hergestellt werden. Einmal durch Mischung von mindestens zwei Einzelfarbstoffen der Formel I, vorzugsweise unter Zusatz von Dispergiermitteln. Dieser Mischprozeß erfolgt bei Temperaturen von 0 bis 190 °C, zweckmäßigerweise in geeigneten Mühlen, beispielsweise Kugel- und Sandmühlen, sowie Knetern, kann aber auch durch Mischen mit der Hand oder durch Einrühren in Dispersionsmittel oder Färbeflotten bewirkt werden.

Als Dispergiermittel kommen solche anionischer oder nichtanionischer Natur in Betracht. Als anionische Dispergiermittel seien genannt Kondensationsprodukte von Naphthalin, Formaldehyd und Schwefelsäure sowie Ligninsulfonate. Nichtionische Dispergiermittel sind z. B. in der DE-OS 27 57 330 beschrieben. Die Einzelfarbstoffe der Formel I sind bekannt und z. B. in der Deutschen Patentschrift 17 94 402 und in der Deutschen Offenlegungsschrift 30 09 695 beschrieben.

Ein weiteres Verfahren zur Herstellung der erfindungsgemäßen Farbstoffmischungen besteht darin, daß man ein Amin der Formel V

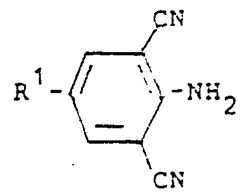

(V)

diazotiert und auf eine Mischung aus mindestens zwei verschiedenen Kupplungskomponenten der Formel IV

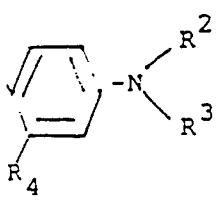

(IV)

in der $R^2$, $R^3$ und $R^4$ die oben angegebenen Bedeutungen haben und $R^4$ vorzugsweise in allen Kupplungskomponenten gleich ist, kuppelt.

Die Zusammensetzung der Mischung der Kupplungskomponenten wird dabei so gewählt, daß die gewünschten erfindungsgemäß Farbstoffmischungen entstehen. Die Diazotierung und Kupplung wird dabei in an sich bekannter Weise durchgeführt, wie sie für die Herstellung von Einzelfarbstoffen üblich ist.

Sollen Farbstoffmischungen hergestellt werden, deren Komponenten sich bezüglich $R^1$ unterscheiden, so wird anstelle eines einzelnen Amins der Formel V eine Mischung solcher Amine diazotiert, deren Einzelkomponente sich in entsprechender Weise bezüglich $R^1$ unterscheiden. Selbstverständlich können auch sowohl Mischungen der Amine V als auch Mischungen der Kupplungskomponenten IV eingesetzt werden.

Nach einem bevorzugten weiteren Verfahren können die neuen Farbstoffmischungen dadurch hergestellt werden, daß man in Farbstoffmischungen, die aus mindestens zwei Farbstoffen der Formel VI

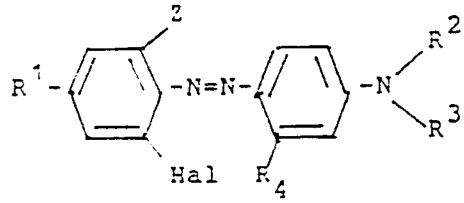

(VI)

bestehen, in der Z für Cyan oder Halogen und Hal für Halogen, vorzugsweise Brom, stehen und $R^1$, $R^2$ $R^3$ und $R^4$ die oben angegebenen Bedeutungen haben, in an sich bekannter Weise Halogen gegen Cyan austauscht, wie es z. B. in der GB-PS 1 125 685 für Einzelfarbstoffe beschrieben ist. Die Zusammensetzung der Mischung der Farbstoffe der Formel VII wird dabei so gewählt, daß erfindungsgemäße Farbstoffmischungen entstehen.

Besonders bevorzugt sind Farbstoffmischungen, die im Verlaufe ihrer Herstellung auf Temperaturen von mindestens 80 °C erhitzt worden sind, bzw. solche Farbstoffmischungen, die aus Mischkristallen bestehen, oder Mischkristalle enthalten, die aus zwei oder mehreren der Farbstoffe der Formel I gebildet sind.

Farbstoffmischungen, die im Verlauf ihrer Herstellung auf Temperaturen von mindestens 80 °C, z. B. auf Temperaturen von 80 bis 190 °C, insbesondere 90 bis 150 °C, vorzugsweise 100 bis 140 °C, erhitzt worden sind, können dadurch hergestellt werden, daß man die Einzelfarbstoffe in Substanz oder bevorzugt in einem Dispersionsmittel, wie z. B. Wasser, 0,5 bis 3 Stunden lang auf die genannten Temperaturen erhitzt, dann abkühlt, in der Regel isoliert und dann miteinander vermischt. Die Erhitzung kann gegebenenfalls auch im Rahmen einer Umkristallisation der Einzelfarbstoffe durchgeführt werden. Die Erhitzung in Wasser auf Temperaturen über 100 °C wird in einem geschlossenen Gefäß durchgeführt. Bei der Erhitzung in einem Dispersionsmittel kann der Zusatzt eines oder mehrerer der weiter unten angegebenen Dispergiermittel zweckmäßig sein.

Wenn man ein aus zwei oder mehreren Einzelfarbstoffen bestehendes Farbstoffgemisch auf die vorstehend genannten Temperaturen erhitzt, werden in der Regel Mischkristalle erhalten, die aus zwei oder mehr verschiedenen Farbstoffen der Formel I bestehen.

Erfindungsgemäße aus Mischkristallen bestehende oder Mischkristalle enthaltende Farbstoffmischungen können auch dadurch hergestellt werden, daß man eine Mischung aus mindestens zwei getrennt hergestellten, verschiedenen Farbstoffen der Formel I, die z. B. in der deutschen Patentschrift 1 794 402 oder in der deutschen Offenle gungsschrift 30 09 695 beschrieben sind, auflöst und zur Kristallisation oder Ausfällung bringt. Zur Auflösung der Farbstoffmischung sind z. B. organische Lösungsmittel, wie Dimethylformamid, Dimethylsulfoxid, Chlorbenzol, o-Dichlorbenzol, Toluol etc. geeignet. Auch Gemische verschiedener Lösungsmittel können verwendet werden. Die Auflösung erfolgt zweckmäßigerweise bei der Siedetemperatur des Lösungsmittels oder Lösungsmittelgemischs. Beim Abkühlen kristallisieren dann Mischkristalle aus. Statt durch Abkühlung können die Mischkristalle auch durch Ausfällung, d. h. durch Zusatz eines Lösungsmittels, in dem der Farbstoff weniger löslich ist, zur Abscheidung gebracht werden.

Besonders bevorzugt werden Mischkristalle auch erhalten, wenn man den oben erwähnten Austausch von Halogen gegen Cyan bei einem aus Farbstoffen der Formel IV bestehenden Gemisch bei Temperaturen von mindestens 80 °C durchführt.

Die Mischkristallbildung kann bevorzugt auch so durchgeführt werden, daß man eine Mischung aus mindestens zwei getrennt hergestellten, verschiedenen Farbstoffen der Formel I in einem schlecht lösenden Lösungsmittel oder Dispersionsmittel anwärmt, wobei nur eine teilweise bis herab zu einer verschwindend geringen Auflösung stattfindet, und die Mischung dadurch in Mischkristalle umwandelt. Als besonders geeignetes Lösungs- oder besser gesagt Dispersionsmittel für eine derartige Umwandlung der Farbstoffmischungen in Mischkristalle hat sich Wasser bei Temperaturen von 80 bis 190 °C, insbesondere 90 bis 150 °C, vorzugsweise 100 bis 140 °C, erwiesen. Es ist selbstverständlich, daß die Erhitzung bei Temperaturen, die nicht mehr in einem offenen Gefäß erreicht werden können, in einem Autoklaven durchgeführt werden. Der Zusatz eines oder mehrerer Lösungsvermittler ist dabei zweckmäßig. Ein solcher Lösungsvermittler ist z. B. ein in Wasser ganz lösliches Lösungsmittel, wie z. B. Ethanol oder ein in Wasser nur teilweise lösliches organisches Lösungsmittel, wie z. B. n-Butanol.

Besonders bevorzugt wird jedoch die Umwandlung der Farbstoffmischungen in Mischkristalle durch Erhitzen in Wasser auf die vorstehend genannten Temperaturen unter Zusatz eines oder mehrerer Emulgatoren und/oder Dispergiermittel durchgeführt.

Geeignete Dispergiermittel sind z. B. anionische oder nichtionische Dispergiermittel, die auch gemeinsam eingesetzt werden können. Anionische Dispergiermittel sind z. B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituierttem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren, Alkyl- oder Alkylarylsulfonate, sowie Alkyl-aryl-polyglykolethersulfate. Nichtionische Dispergiermittel oder Emulgatoren sind z. B. Umsetzungsprodukte von Alkylenoxiden, wie z. B. Ethylen- oder Propylenoxid mit alkylierbaren Verbindungen, wie z. B. Fettalkoholen, Fettaminen, Fettsäuren, Phenolen, Alkylphenolen, Arylalkylphenolen, Arylalkylarylphenolen und Carbonsäure-amiden, wie z. B. Anlagerungsprodukte von 5 bis 10 Ethylenoxid-Einheiten an $C_8$-$C_{10}$-Alkylphenole.

Die Umwandlung der Farbstoffgemische in Mischkristalle durch Erhitzen in Wasser ist in der Regel nach 0,5 bis 10 Stunden, vorzugsweise 1 bis 3 Stunden, beendet.

Das Vorliegen von Mischkristallen kann durch Röntgenzählrohrdiagramme nachgewiesen werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet.

Als hydrophobe synthetische Materialien kommen in Betracht: Cellulose-2 1/2-Acetat, Cellulosetriacetat, Polyamide und besonders hochmolekulare Polyester, wie z. B. Polyethylenglykolterephthalat.

Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt. Diese Materialien können in Form von flächen- oder fadenförmigen Gebilden vorliegen und z. B. zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis ca. 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 80 bis 230 °C fixiert wird. Das Bedrucken der genannten Materialien kann so durchgeführt werden, daß die mit erfindungsgemäße Farbstoffe enthaltenden Druckpasten bedruckte Ware zur Fixierung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Lichtechtheit und einer geringen Reduktionsempfindlichkeit.

Die erfindungsgemäßen Farbstoffe eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlammt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z. B. Umsetzungsprodukte von Alkylenoxiden, wie z. B. Ethylen- oder Propylenoxid mit alkylierbaren Verbindungen, wie z. B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykoläthersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis 50 Gewichtsprozent und einen Dispergiermittelgehalt bis zu etwa 25 % eingestellt. Aus ökonomischen Gründen werden Farbstofftgehalte von 15 Gewichtsprozent meist nicht unterschritten.

Die Dispersionen können auch noch weitere Hilfsmittel enthalten, z. B. solche, die als Oxidationsmittel wirken, wie z. B. Natrium-m-nitrobenzolsulfonat oder fungicide Mittel, wie z. B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z. B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z. B. Netz-, Oxydations-, Konservierungs- und Entstaubungsmittel. Ein bevorzugtes Herstellungsverfahren für pulverförmige Farbstoffzubereitungen besteht darin, daß den oben beschriebenen flüssigen Farbstoffdispersionen die Flüssigkeit entzogen wird, z. B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln, wie z. B. Alkali-Alginaten oder dergleichen, und gegebenenfalls weiteren Zusätzen, wie z. B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

a) In eine Suspension aus 100 ml Dimethylsulfoxid und 20 g Kupfer-I-cyanid werden bei 75 bis 80 °C 45,2 g des Farbstoffs der Formel

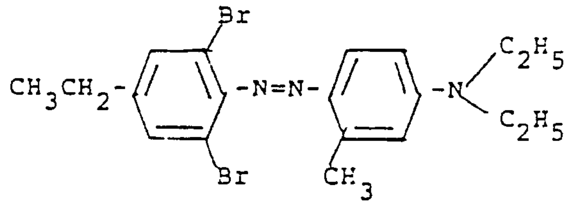

eingetragen und 1/2 Stunde bei dieser Temperatur gerührt. Dann wird die Temperatur 1/2 Stunde auf 110 °C angehoben und der Ansatz anschließend langsam kaltgerührt, abgesaugt, mit 45 ml Dimethylsulfoxid, 7,5 %-iger wäßriger Ammoniaklösung und Wasser gewaschen und unter vermindertem Druck getrocknet.

Man erhält so einen blaustichig roten Farbstoff der Formel

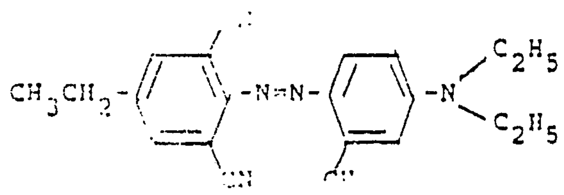

der bei 139-140 °C schmilzt und bei 514 nm sein Absorptionsmaximum besitzt.

Durch einen praxisüblichen Finish-Prozeß durch wäßrige Perlmahlung mit einem praxisüblichen Dispergiermittel auf Basis Ligninsulfonat und anschließende Sprühtrocknung erhält man eine färbefertige Farbstoffpräparation.

b) 1,2 g der so erhaltenen Farbstoffpräparation werden in 2 000 g Wasser dispergiert. Die Dispersion wird mit Essigsäure auf einen pH-Wert von 4-5 eingestellt und mit 4 g wasserfreiem Natriumacetat und 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 Minuten bei 120 °C. Nach anschließendem Spülen, reduktivem Nachbehandeln mit einer 0,2 %igen wäßrigen Natriumdithionit-Lösung während 15 Minuten bei 70 bis 80 °C, Spülen und Trocknen erhält man eine farbstarke rote Färbung mit sehr guten coloristischen Eigenschaften. Es verbleibt keine merkliche Farbstoffmenge im Färbebad.

c) Wird eine Färbeflotte aus 0,6 g des nach Beispiel 1a hergestellten Farbstoffs so zubereitet wie im Beispiel 1b beschrieben, und werden darin 100 g eines Triacetat-Gewebes 1 Stunde bei 120 °C gefärbt und wie im Beispiel 1b beschrieben fertiggestellt, so erhält man eine farbstarke rote Färbung mit sehr guten coloristischen Eigenschaften.

d) Führt man die im Beispiel 1c beschriebene Färbung unter Zusatz eines handelsüblichen Färbebeschleunigers (Carriers) bei einer auf 98-100 °C verringerten Färbetemperatur und einer auf 60 Minuten erhöhten Färbedauer aus, erhält man eine gleichwertige Färbung bei gleichwertiger Färbebaderschöpfung.

In den nachfolgenden Tabellen sind weitere erfindunsgemäße Farbstoffe angegeben, die auf hydrophoben Fasermaterialien ebenfalls farbstarke rote Färbungen oder Drucke mit ebenfalls sehr guten coloristischen Eigenschaften liefern.

(Siehe Tabellen Seite 9 ff.)

Tabelle I

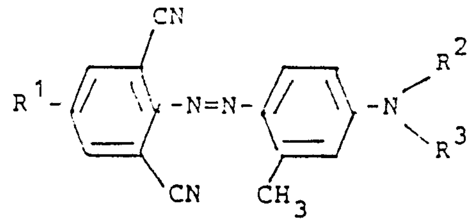

($R^4 = CH_3$)

| $R^1$ | $R^2$ | $R^3$ |
|---|---|---|
| $C_2H_5$ | $n-C_3H_7$ | $n-C_3H_7$ |
| $C_2H_5$ | $n-C_3H_7$ | $C_2H_5$ |
| $C_2H_5$ | $n-C_3H_7$ | $CH_3$ |
| $C_2H_5$ | $n-C_4H_9$ | $C_2H_5$ |
| $C_2H_5$ | $i-C_4H_9$ | $CH_3$ |
| $n-C_3H_7$ | $C_2H_5$ | $C_2H_5$ |
| $n-C_3H_7$ | $n-C_3H_7$ | $n-C_3H_7$ |
| $n-C_3H_7$ | $C_2H_5$ | $n-C_3H_7$ |
| $i-C_3H_7$ | $C_2H_5$ | $C_2H_5$ |
| $i-C_3H_7$ | $n-C_3H_7$ | $n-C_3H_7$ |
| $n-C_4H_9$ | $C_2H_5$ | $C_2H_5$ |
| sek.$C_4H_9$ | $C_2H_5$ | $C_2H_5$ |
| sek.$C_4H_9$ | $CH_3$ | $CH_3$ |
| tert.$C_4H_9$ | $C_2H_5$ | $C_2H_5$ |
| Cyclo.$C_5H_9$ | $i-C_3H_7$ | $CH_3$ |
| Cyclo.$C_6H_{11}$ | $C_2H_5$ | $C_2H_5$ |
| $C_2H_5$ | $CH_3$ | $(CH_2)_2OC_2H_5$ |
| $C_2H_5$ | $CH_3$ | $(CH_2)_2O-(n)C_4H_9$ |
| $C_2H_5$ | $CH_3$ | $(CH2)_2O$-sec.$C_4H_9$ |
| $C_2H_5$ | $C_2H_5$ | $(CH_2)_2OCH_3$ |
| $C_2H_5$ | $C_2H_5$ | $(CH_2)_2OC_4H_9$ |
| $C_2H_5$ | $C_2H_5$ | $(CH_2)_2OCH(CH_3)_2$ |
| $C_2H_5$ | $(CH_2)_2OCH_3$ | $(CH_2)_2OCH_3$ |
| $C_2H_5$ | $(CH_2)_2O-(n)C_3H_7$ | $(CH_2)_2O-(n)C_3H_7$ |
| $C_2H_5$ | $(CH_2)_2O-(n)C_4H_9$ | $(CH_2)_2OCH_3$ |
| $n-C_3H_7$ | $CH_3$ | $(CH_2)_2OC_2H_5$ |
| $n-C_3H_7$ | $C_2H_5$ | $(CH_2)_2OCH_3$ |
| $n-C_3H_7$ | $(CH_2)_2OCH_3$ | $(CH_2)_2OCH_3$ |
| $i-C_3H_7$ | $C_2H_5$ | $(CH_2)_2OCH_3$ |
| $i-C_3H_7$ | $(CH_2)_2OC_2H_5$ | $(CH_2)_2OC_2H_5$ |
| Cyclo.$C_6H_{11}$ | $(CH_2)_2OCH_3$ | $(CH_2)_2OCH_3$ |
| $CH_3$ | $(CH_2)_2CN$ | $C_2H_5$ |
| $CH_3$ | $(CH_2)_2CN$ | $nC_4H_9$ |
| $CH_3$ | $(CH_2)_2CN$ | $i-C_3H_7$ |

Tabelle I (Fortsetzung)

| $R^1$ | $R^2$ | $R^3$ |
|---|---|---|
| $CH_3$ | $(CH_2)_2CN$ | $(CH_2)_2OC_2H_5$ |
| $CH_3$ | $CH(CH_3)CH_2CN$ | $n-C_3H_7$ |
| $CH_3$ | $(CH_2)_2CN$ | $(CH_2)_2CN$ |
| $C_2H_5$ | $(CH_2)_2CN$ | $n-C_3H_7$ |
| $C_2H_5$ | $(CH_2)_2CN$ | $(CH_2)_2OCH_3$ |
| $C_2H_5$ | $(CH_2)_4CN$ | $C_2H_5$ |
| $C_2H_5$ | $CH_2CH(CH_3)CN$ | $CH_3$ |
| F | $(CH_2)_2CN$ | $C_2H_5$ |
| F | $(CH_2)_2CN$ | $i-C_4H_9$ |
| F | $(CH_2)_2CN$ | $(CH_2)_2O-(i)C_3H_7$ |
| F | $(CH_2)_2CN$ | $(CH_2)_2O-(n)C_4H_9$ |
| Cl | $(CH_2)_2CN$ | $CH_3$ |
| Cl | $(CH_2)_2CN$ | $n-C_4H_9$ |
| Cl | $(CH_2)_2CN$ | $C_2H_5$ |
| Cl | $(CH_2)_2CN$ | $(CH_2)_2OCH_3$ |
| Cl | $(CH_2)_2CN$ | $(CH_2)_2O-(n)C_3H_7$ |
| Cl | $CH(CH_3)CH_2CN$ | $n-C_3H_7$ |
| Br | $(CH_2)_2CN$ | $C_2H_5$ |
| Br | $(CH_2)_2CN$ | $n-C_3H_7$ |
| Br | $(CH_2)_2CN$ | $(CH_2)_2CN$ |
| Br | $(CH_2)_2CN$ | $(CH_2)_2OC_2H_5$ |
| Br | $(CH_2)_2CN$ | $(CH_2)_4OCH_3$ |

Tabelle II ($R^4$ = H)

| $R^1$ | $R^2$ | $R^3$ |
|---|---|---|
| $C_2H_5$ | $C_2H_5$ | $C_2H_5$ |
| $C_2H_5$ | $(n)C_3H_7$ | $(n)C_3H_7$ |
| $i-C_3H_7$ | $C_2H_5$ | $C_2H_5$ |
| $CH_3$ | $(CH_2)_2CN$ | $CH_3$ |
| $CH_3$ | $(CH_2)_2CN$ | $(n)C_3H_7$ |
| $CH_3$ | $CH_2CH(CH_3)CN$ | $C_2H_5$ |
| $C_2H_5$ | $(CH_2)_2CN$ | $(n)C_4H_9$ |
| $C_2H_5$ | $CH(CH_3)CH_2CN$ | $C_2H_5$ |

Tabelle II (Fortsetzung) $(R^4 = H)$

| $R^1$ | $R^2$ | $R^3$ |
|---|---|---|
| $i\text{-}C_3H_7$ | $(CH_2)_2CN$ | $C_2H_5$ |
| $n\text{-}C_4H_9$ | $(CH_2)_2CN$ | $C_2H_5$ |
| $CH_3$ | $(CH_2)_2CN$ | $(CH_2)_2OC_2H_5$ |
| $CH_3$ | $(CH_2)_2CN$ | $(CH_2)_4OCH_3$ |
| $CH_3$ | $(CH_2)_2CN$ | $(CH_2)_4OCH_3$ |
| $C_2H_5$ | $(CH_2)_2CN$ | $(CH_2)_2OCH_3$ |
| $C_2H_5$ | $(CH_2)_2CN$ | $(CH_2)_2O\text{-}(n)C_3H_7$ |
| $CH_3$ | $(CH_2)_2CN$ | $(CH_2)_2CN$ |
| F | $(CH_2)_2CN$ | $CH_3$ |
| F | $(CH_2)_2CN$ | $nC_3H_7$ |
| F | $(CH_2)_2CN$ | $(CH_2)_2OC_2H_5$ |
| F | $(CH_2)_3CN$ | $C_2H_5$ |
| F | $(CH_2)_2CN$ | $(CH_2)_4OC_2H_5$ |
| Cl | $(CH_2)_2CN$ | $CH_3$ |
| Cl | $(CH_2)_2CN$ | $C_2H_5$ |
| Cl | $(CH_2)_2CN$ | $nC_4H_9$ |
| Cl | $(CH_2)_2CN$ | $(CH_2)_2O\text{-}(n)C_4H_9$ |
| Cl | $(CH_2)_2CN$ | $(CH_2)_2CN$ |
| Cl | $CH(CH_3)CH_2CN$ | $nC_3H_7$ |
| Br | $(CH_2)_2CN$ | $C_2H_5$ |
| Br | $(CH_2)_2CN$ | $nC_3H_7$ |
| Br | $(CH_2)_2CN$ | $(CH_2)_2O\text{-}(n)C_3H_7$ |
| Br | $(CH_2)_4CN$ | $(CH_2)_4CN$ |
| Br | $(CH_2)_2CN$ | $(CH_2)_4OCH_3$ |
| Br | $CH_2CH(CH_3)CN$ | $CH_3$ |

## Patentansprüche

1. Von ionogenen Gruppen freie Azofarbstoffe der allgemeinen Formel I

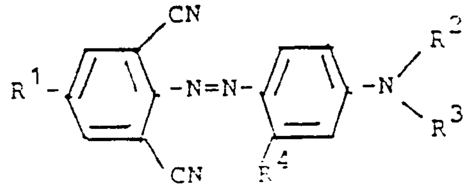

(I)

in der

$R^1$ Alkyl mit 2 bis 6 C-Atomen oder Cycloalkyl mit 5 oder 6 C-Atomen und, sofern $R^2$ und/oder $R^3$ Cyanalkyl bedeutet, auch Halogen oder Methyl,

$R^2$ und $R^3$ unabhängig voneinander lineares Alkyl mit 1 bis 4 C-Atomen, Alkoxyalkyl mit 2 bis 4 C-Atomen in der Alkyl- und mit 1 bis 4 C-Atomen in der Alkoxygruppe, und Cyanalkyl mit 2 bis 4 C-Atomen in der Alkylgruppe und

$R^4$ Wasserstoff oder Methyl bedeuten.

2. Von ionogenen Gruppen freie Azofarbstoffe gemäß Anspruch 1, dadurch gekennzeichnet, daß $R^1$ Ethyl, n-Propyl oder i-Propyl ist.

3. Von ionogenen Gruppen freie Azofarbstoffe gemäß den Ansprüchen 1 und 2, dadurch gekennzeichnet, daß $R^2$ und/oder $R^3$ Cyanalkyl mit 2 bis 4 C-Atomen in der Alkylgruppe sind.

4. Mischungen aus zwei oder mehreren Farbstoffen der Formel I des Anspruchs 1, worin $R^1$ bis $R^4$ die oben angegebenen Bedeutungen haben und $R^1$ bei einer Farbstoffkomponente zusätzlich auch Methyl sein kann und der Mindestanteil der Komponenten 10 Gew.% und der Höchstanteil 90 Gew.% beträgt.

5. Farbstoffmischungen gemäß Anspruch 4, dadurch gekennzeichnet, daß sie mindestens eine Komponente enthalten, in der $R^1$ Alkyl mit 2 bis 6 C-Atomen oder Cycloalkyl mit 5 oder 6 C-Atomen ist.

6. Farbstoffmischungen gemäß den Ansprüchen 4 und 5, dadurch gekennzeichnet, daß sie im Verlaufe ihrer Herstellung auf Temperaturen von mindestens 80° erhitzt worden sind, bzw. solche Farbstoffmischungen, die aus Mischkristallen bestehen oder Mischkristalle enthalten, die aus zwei oder mehreren der Farbstoffe der Formel I gebildet sind.

7. Verfahren zur Herstellung von Azofarbstoffen der Formel I des Anspruchs 1, dadurch gekennzeichnet, daß man Azofarbstoffe der Formel II

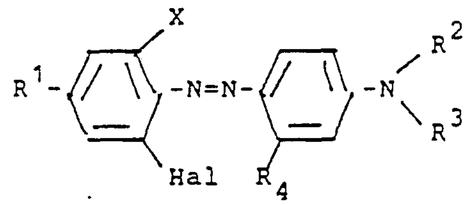

(II)

in welcher $R^1$, $R^2$, $R^3$ und $R^4$ die in Anspruch 1 angegebenen Bedeutungen haben, X Cyan oder Hal und Hal ein Halogenatom wie Chlor oder insbesondere Brom bedeuten, in an sich bekannter Weise einer nukleophilen Austauschreaktion unterwirft, wobei als nukleophiles Agenz das Cyanidion $CN^{\ominus}$ eingesetzt wird.

8. Verfahren zur Herstellung von Azofarbstoffen der Formel I des Anspruchs 1, dadurch gekennzeichnet, daß eine Diazoniumverbindung eines aromatischen Amins der allgemeinen Formel III

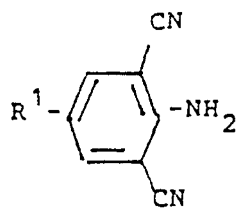

(III)

mit einer Kupplungskomponente der allgemeinen Formel IV,

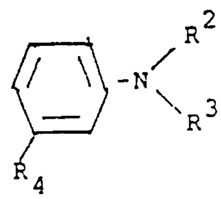

(IV)

worin $R^1$, $R^2$, $R^3$ und $R^4$ die oben angegebenen Bedeutungen haben, gekuppelt wird.

9. Verfahren zur Herstellung von Mischungen aus zwei oder mehreren Farbstoffen der Formel I gemäß Anspruch 4, dadurch gekennzeichnet, daß man entweder das Verfahren des Anspruchs 7 unter Einsatz entsprechender Mischungen der Ausgangsfarbstoffe der Formel II durchführt oder daß man das Verfahren des Anspruchs 8 unter Einsatz entsprechender Mischungen der Amine der Formel III und/oder der Kupplungskomponenten der Formel IV durchführt.

10. Verwendung von Farbstoffen der Formel I des Anspruchs 1 und von Farbstoffmischungen des Anspruchs 4 zum Färben und Bedrucken von hydrophoben Fasermaterialien.

**Claims**

1. Azo dyestuffs which are free of ionic groups and have the general formula I

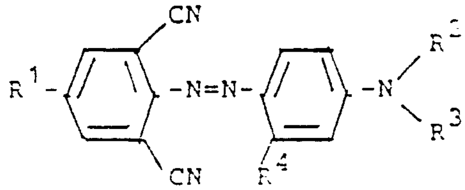

(I)

in which

$R^1$ denotes alkyl of 2 to 6 carbon atoms or cycloalkyl of 5 or 6 carbon atoms and, if $R^2$ and/or $R^3$ denote cyanoalkyl, also halogen or methyl,

$R^2$ and $R^3$, independently of the other, each denote linear alkyl of 1 to 4 carbon atoms, alkoxyalkyl of 2 to 4 carbon atoms in the alkyl group and of 1 to 4 carbon atoms in the alkoxy group, or cyanoalkyl of 2 to 4 carbon atoms in the alkyl group and

$R^4$ denotes hydrogen or methyl.

2. Azo dyestuffs free of ionic groups and as claimed in claim 1, characterised in that $R^1$ is ethyl, n-propyl or isopropyl.

3. Azo dyestuffs free of ionic groups and as claimed in Claims 1 and 2, characterised in that $R^2$ and/or $R^3$ are each cyanoalkyl of 2 to 4 carbon atoms in the alkyl group.

4. Mixtures of two or more dyestuffs of the formula I of Claim 1 in which $R^1$ to $R^4$ are as defined above and $R^1$ in one dyestuff component can additionally be methyl and the minimum proportion of the components is 10 % by weight and the maximum proportion is 90 % by weight.

5. Dyestuff mixtures as claimed in Claim 4, characterised in that they contain at least one component in which $R^1$ is alkyl of 2 to 6 carbon atoms or cycloalkyl of 5 or 6 carbon atoms.

6. Dyestuff mixtures as claimed in Claims 4 and 5, characterised in that, in the course of their preparation, they have been heated to temperatures of at least 80 °C and/or consist of mixed crystals or contain mixed crystals which have been formed from two or more dyestuffs of the formula I.

7. Process for preparing azo dyestuffs of the formula I of Claim 1, characterised in that azo dyestuffs of the formula II

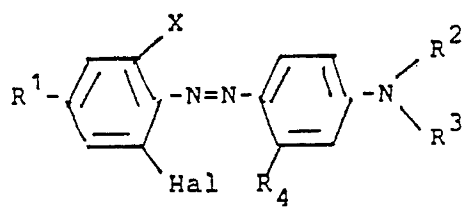

(II)

in which $R^1$, $R^2$, $R^3$ and $R^4$ are as defined in Claim 1, X denotes cyano or Hal and Hal denotes a halogen atom such as chlorine or in particular bromine, are subjected in a manner known per se to a nucleophilic replacement reaction in which the nucleophilic reagent is the cyanide ion $CN^-$.

8. Process for preparing azo dyestuffs of the formula I of Claim 1, characterised in that a diazonium compound of an aromatic amine of the general formula III

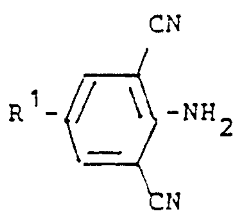

(III)

is coupled with a coupling component of the general formula IV

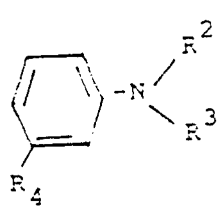

(IV)

in which $R^1$, $R^2$, $R^3$ and $R^4$ are as defined above.

9. Process for preparing mixtures of two or more dyestuffs of the formula I as claimed in Claim 4, characterised in that either the process of Claim 7 is carried out using appropriate mixtures of the starting dyestuffs of the formula II or the process of Claim 8 is carried out using appropriate mixtures of the amines of the formula III and/or of the coupling components of the formula IV.

10. Use of dyestuffs of the formula I of Claim 1 and of dyestuff mixtures of Claim 4 for dyeing and printing hydrophobic fibre materials.

**Revendications**

1. Colorants azoïques, dépourvus de radicaux ionogènes, qui répondent à la formule générale I :

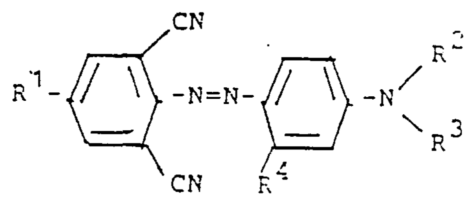

(I)

dans laquelle :

$R^1$ représente un alkyle contenant de 2 à 6 atomes de carbone ou un cycloalkyle contenant 5 ou 6 atomes de carbone et, dans le cas où $R^2$ et/ou $R^3$ représentent un radical cyanalkyle, peut aussi représenter un halogène ou un méthyle,

$R^2$ et $R^3$ représentent chacun, indépendamment l'un de l'autre, un alkyle linéaire contenant de 1 à 4 atomes de carbone, un alcoxyalkyle dont la partie alkyle contient de 2 à 4 atomes de carbone et la partie alcoxy de 1 à 4, ou un cyanalkyle dont la partie alkyle contient de 2 à 4 atomes de carbone, et

$R^4$ représente l'hydrogène ou un méthyle.

2. Colorants azoïques dépourvus de radicaux ionogènes, selon la revendication 1, caractérisés en ce que $R^1$ représente un radical éthyle, n-propyle ou isopropyle.

3. Colorants azoïques dépourvus de radicaux ionogènes, selon l'une des revendications 1 et 2, caractérisés en ce que $R^2$ et/ou $R^3$ représentent un radical cyanalkyle dont la partie alkyle contient de 2 à 4 atomes de carbone.

4. Mélanges de deux ou de plus de deux colorants de formule I selon la revendication 1, dans lesquels les symboles $R^1$ à $R^4$ ont les significations précédemment données, et $R^1$, pour un colorant du mélange, peut en outre représenter un radical méthyle, la proportion minimale de chacune des composantes étant de 10 % en poids et la proportion maximale de 90 % en poids.

5. Mélanges de colorants selon la revendication 4, caractérisés en ce qu'ils contiennent au moins une composante dans laquelle $R^1$ représente un radical alkyle contenant de 2 à 6 atomes de carbone ou un radical cycloalkyle contenant 5 ou 6 atomes de carbone.

6. Mélanges de colorants selon l'une des revendications 4 et 5, caractérisés en ce qu'ils ont été chauffés, au cours de leur préparation, à des températures d'au moins 80° ou en ce qu'ils sont des mélanges de colorants constitués de cristaux mixtes ou contenant des cristaux mixtes formés à partir de deux ou de plus de deux des colorants de formule I.

7. Procédé de préparation de colorants azoïques de formule I selon la revendication 1, procédé caractérisé en ce qu'on soumet des colorants azoïques répondant à la formule II :

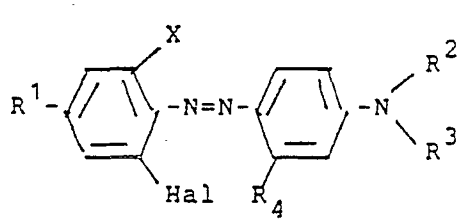

(II)

dans laquelle $R^1$, $R^2$, $R^3$ et $R^4$ ont les significations données à la revendication 1, X représente un radical cyano ou Hal, et Hal représente un atome d'halogène, tel que le chlore ou, mieux, le brome, de manière connue, à une réaction d'échange nucléophile, l'agent nucléophile mis en jeu étant l'ion cyanure $CN^-$.

8. Procédé de préparation de colorants azoïques de formule I selon la revendication 1, procédé caractérisé en ce qu'on copule un diazoïque d'une amine aromatique de formule générale III :

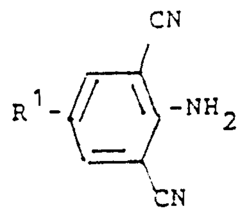

(III)

avec un copulant de formule générale IV :

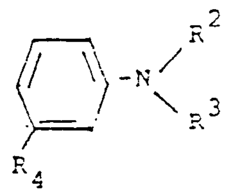

(IV)

formules dans lesquelles $R^1$, $R^2$, $R^3$ et $R^4$ ont les significations précédemment données.

9. Procédé de préparation de mélanges de deux ou de plus de deux colorants de formule I selon la revendication 4, procédé selon lequel ou bien on effectue le procédé de la revendication 7 en utilisant des mélanges correspondants des corps de départ de formule II, ou bien on effectue le procédé de la revendication 8 en utilisant des mélanges correspondants des amines de formule III et/ou des copulants de formule IV.

10. Application de colorants de formule I selon la revendication 1 et de mélanges de colorants selon la revendication 4 pour la teinture et l'impression de matières fibreuses hydrophobes.